(19) **Europäisches Patentamt / European Patent Office / Office européen des brevets**

(11) **EP 2 443 186 B1**

(12) **EUROPEAN PATENT SPECIFICATION**

(45) Date of publication and mention of the grant of the patent:
**17.02.2016 Bulletin 2016/07**

(51) Int Cl.:
*C08J 9/22* $^{(2006.01)}$   *C08L 23/04* $^{(2006.01)}$
*C08K 3/20* $^{(2006.01)}$   *H01M 2/16* $^{(2006.01)}$
*H01M 8/10* $^{(2006.01)}$   *H01M 10/052* $^{(2010.01)}$
*C08J 7/04* $^{(2006.01)}$

(21) Application number: **10789734.0**

(22) Date of filing: **17.06.2010**

(86) International application number:
**PCT/KR2010/003913**

(87) International publication number:
**WO 2010/147407 (23.12.2010 Gazette 2010/51)**

(54) **MICROPOROUS POLYETHYLENE FILM WITH THERMALLY STABLE HYBRID-COMPOSITE LAYERS**

**MIKROPORÖSER POLYETHYLENFILM MIT WÄRMESTABILEN HYBRIDVERBUNDSCHICHTEN**

**FILM DE POLYÉTHYLÈNE MICROPOREUX AVEC COUCHES COMPOSITES HYBRIDES THERMIQUEMENT STABLES**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **17.06.2009 KR 20090053696**

(43) Date of publication of application:
**25.04.2012 Bulletin 2012/17**

(73) Proprietor: **SK Innovation Co., Ltd.**
**Seoul 110-110 (KR)**

(72) Inventors:
• **KIM, Yongkyoung**
**Daejeon 305-390 (KR)**
• **SUNG, Jongmoon**
**Seoul 143-769 (KR)**
• **LEE, Jean**
**Daejeon 305-712 (KR)**
• **JOO, Dongjin**
**Goyang-si**
**Gyeonggi-do 412-270 (KR)**
• **LEE, Youngkeun**
**Seoul 137-797 (KR)**

(74) Representative: **Stolmár & Partner**
**Patentanwälte PartG mbB**
**Blumenstraße 17**
**80331 München (DE)**

(56) References cited:
EP-A1- 1 920 920   EP-A1- 1 942 000
WO-A2-2009/125984   WO-A2-2009/125985
WO-A2-2009/139585   JP-A- 2000 080 197
JP-A- 2002 355 938   KR-A- 20020 071 203
KR-A- 20080 039 950   KR-A- 20080 068 722

**Description**

[Technical Field]

The present invention relates to microporous polyethylene composite film which can overcome the disadvantage of low stability at high temperature of conventional microporous polyethylene film. More specifically, the invention relates to micropous polyethylene composite film which can solve the problem of the film stability at high temperature, due to a coated film comprising heat resistant resin and inorganic particles, and achieve improvement in safety of batteries, being advantageously usable as separator for lithium secondary batteries with high capacity and high power.

[Background Art]

Microporous polyethylene film is widely utilized in various battery separators, filters for separation and membrane for microfiltration due to excellent chemical stability and physical properties. Among them, a separator for a secondary battery serves to isolate the space between an anode and a cathode, having high ion transmission through internal pores.

Recently, improvement in properties of a separator has been highly required as a measure to improve electric safety of secondary batteries with high capacity and high power. If thermal stability of a separator in a lithium secondary battery is lowered, damage (breakage owing to dendrite) or deformation (shrinkage) of the separator caused by elevated temperature in the battery may occur, thereby causing a short circuit between the electrodes. There would be risk of overheat or fire of a battery.

Though stability of batteries can be ensured to some extent at the level of state of current art of microporous polyolefin film in conventional batteries with conventional power and capacity, thermal stability at high temperature is acutely needed in case of batteries for hybrid electric motorvehicles (HEV) and tools wherein high power/capacity of a battery is required, since the possibility of fire and explosion caused by abnormal behavior of a battery may be several times to dozens times in such cases as compared to conventional batteries. A separator having excellent thermal stability at high temperature protects it from damage, and prevents direct short circuit between electrodes. When a short circuit between electrodes occurs due to dendrite generated from the electrodes during charging or discharging of a battery, heat is generated from the battery. If a separator having excellent stability at high temperature is used for a battery, damage of the separator is essentially prevented to avoid fire or explosion of the battery.

In order to increase thermal stability of a separator, employed may be a method of crosslinking the separators, a method of adding inorganic substances, or a method of blending a heat resistant resin with polyethylene resin or forming a coated layer. Among them, US Patent No. 5,641,565 discloses the method of kneading a resin with excellent heat resistance. The technique, however, requires molecules of ultra-high molecular weight of not less than 1,000,000, in order to avoid deterioration of physical properties resulted from addition of heterogeneous resin (polypropylene) and inorganic substances in addition to polyethylene. Further, a process for extracting and removing the inorganic substances used should be carried out, and thus, the overall process is complicated.

A method of forming a coated layer on a microporous polyolefin film is disclosed by US Patent No. 5,691,077 and Japanese Patent Laid-Open No. 2002-321323. A polypropylene layer was incorporated by using a dry or wet process, but there is a limitation to prepare a separator of high heat resistance because thermal shrinkage cannot be fundamentally avoided due to restricted melting point of polypropylene and the elongated heat resistant layer.

According to Korean Patent Laid-Open No. 2007-0080245 and International Patent Laid-Open No. WO2005/049318, a polyvinylidene fluoride copolymer as a heat resistant resin is incorporated in a coated layer in order to enhance heat resistance of a separator and thermal safety of a battery. However, it is easily dissolved or gelated in organic solvent such as propylene carbonate, ethylene carbonate, diethyl carbonate, dimethyl carbonate and ethyl methyl carbonate, which is employed as electrolyte of a non-aqueous battery. Thus, there is a limitation of improving thermal safety of a battery.

A microporous polyolefin composite film employing a highly heat resistant resin is disclosed by Japanese Patent Laid-Open No. 2002-355938. Highly heat resistant resin was incorporated in microporous polyethylene film through a phase separation process, but the process for forming pores through phase separation by means of drying resin alone in order to form a coated layer of thin film could not provide efficient permeability, but the size and homogeneity of phase separation would vary depending on the drying conditions such as humidity and temperature. Thus, the method had limitations to produce a separator having excellent homogeneity of quality. In addition, shrinkage of base layer generated by abrupt temperature elevation upon abnormal behavior of a battery such as internal short circuit cannot be effectively prevented. By virtue of high heat resistance of the coated layer, no thermal deformation occurs at the melting temperature (130°C) of the base layer, thereby preventing shrinkage of the base layer to some extent. But the resistance is quite insufficient to thoroughly inhibit shrinkage of the base layer, because of low permeability and loose network structure of the coated layer, so that the process is not suitable for preparing a separator having enhanced thermal stability.

Processes for forming a coated layer by incorporating inorganic substances to a highly heat resistant resin layer were disclosed by Korean Patent Laid-Open Nos. 10-2004-0050149 and 10-2007-0080245. On the surface of microporous polyolefin film, inorganic particles were incorporated by means of polymeric binder. However, the primary purpose of incorporating the inorganic particles was to increase impregnation of the separator in the electrolyte. Since the polymeric binder is essentially gelated in the electrolyte, heat resistant property of inorganic substances cannot be effectively achieved.

According to Japanese Patent Laid-Open No. 2007-273443, a solution was applied by means of a process to ensure heat resistance and high permeability at the same time, and plasticizer was extracted therefrom. Since the coated layer cannot be easily deposited on the base layer due to the presence of plasticizer on the surface of the base layer, release of the coated layer from the base layer would readily occur. Owing to the effect of solvent used in order to extract plasticizer, the heat resistant resin of the coated layer may be damaged, so that production of effective separators with homogeneity and heat resistance would be limited.

When PVDF or PVDF-copolymer, or PVA having the melting temperature of about 170°C, which is referred in Korean Patent Laid-Open No. 10-2006-0101541, is used with organic solvent of high polarity such as ethylene carbonate, propylene carbonate and diethyl carbonate, gelation occurs at high temperature to cause release from the base layer. Thus the coated layer cannot be the one aiming at improving thermal safety.

[Disclosure]

[Technical Problem]

Conventional techniques, in view of heat resistance (which is an important property for a separator of a secondary battery of high capacity and high power), cannot significantly contribute to enhance heat resistance of a separator because of limited heat resistance of the incorporated resin itself, or problems in the manufacturing process in spite of using a highly heat resistant resin. Further, it is evaluated that other properties such as gas permeability and quality uniformity would be poor. In addition, those techniques are disadvantageous in that stable thermal safety cannot be provided in organic electrolyte at high temperature and high voltage under practical application to batteries.

[Technical Solution]

The present inventors have conducted extensive studies in order to solve the problems of conventional techniques described above, and found that microporous polyethylene composite film according to claim 1 characterized by the following properties is effective in view of uniform heat resistance and permeability, and homogeneity of quality, so that it can be used as a separator for a lithium secondary battery:

(1) Microporous polyethylene composite film having microporous organic/inorganic (hybrid) composite coated layer with excellent thermal properties, wherein the coated layer is formed on at least one surface of the microporous polyethylene film by using a heat resistant resin of melting temperature or glass transition temperature of 170°C to 500°C and inorganic particles at the same time.
(2) Microporous polyethylene composite film having the permeability (Gurley) of overall composite film including a coated layer of not more than 300 sec, shrinkage at 150°C for 1 hour of 0~3% in MD/TD direction, maximum shrinkage by TMA (thermo mechanical analysis) of not more than 3%, and meltdown temperature of 145~200°C.
(3) Microporous polyethylene composite film wherein the coated layer made of the composition described above is formed with a thickness of 10 to 60% of that of the microporous polyethylene base layer.

In order to apply the invention, a process according to claim 6 comprising the following stages is utilized in order to provide the microporous polyethylene composite film:

(1) preparing a microporous polyethylene film;
(2) dissolving the heat resistant resin in a solvent;
(3) adding inorganic substances to the solution thus prepared to provide a mixed solution;
(4) applying the mixed solution containing the heat resistant resin and inorganic substances on at least one side of the microporous polyethylene film; and
(5) sufficiently drying and removing the solvent from the coated layer thus formed.

The present invention is to provide microporous polyethylene composite film having high thermal stability and high permeability for a separator at high temperature as well as excellent quality stability, in addition to the physical properties described above. Further it is to provide a separator which conforms to high power/high capacity of batteries.

[Advantageous Effects]

In microporous polyethylene composite film according to the present invention, the safety problems involved with high power/high capacity of batteries can be essentially solved, by virtue of high stability at high temperature of the film. In spite of formation of the coated layer, reduction of permeability of film is minimized, and thus, reduction in performances of a battery is minimized. Due to uniform thickness and excellent quality, batteries having high stability and reliability can be manufactured.

[Description of Drawings]

The above and other objects, features and advantages of the present invention will become apparent from the following description of preferred embodiments given in conjunction with the accompanying drawings, in which:

Fig. 1 is an electron microphotograph (x 20,000) of a surface of the microporous film of Comparative Example 1.
Fig. 2 is an electron microphotograph (x 10,000) of a surface of the microporous film of Example 6.
Fig. 3 shows comparative photographs of Example 4 (b) and Comparative Example 1 (a) after standing at 150°C for 1 hour.
Fig. 4 shows photographs of nail penetration test of Example 1 (a) and Comparative Example 4 (b).
Fig. 5 is a graph showing the results of TMA meltdown.

[Best Mode]

According to the present invention, provided is a microporous polyethylene composite film comprising a microporous organic/inorganic composite coated layer formed on at least one side of microporous polyethylene film by incorporating a heat resistant resin and inorganic particles at the same time. In order to ensure microporous polyethylene composite film having sufficient permeability and heat resistance, of which the permeability (Gurley) of overall composite film comprising a coated layer is not more than 300 sec; shrinkage at 150°C for 1 hour is 0~3% in both MD/TD directions; maximum shrinkage in TMA is not more than 3%, and TMA meltdown temperature is 145~200°C, solid content including heat resistant resin and inorganic particles is from 8 to 35 wt% on the basis of 100 wt% of the overall solution, volume ratio of heat resistant resin to inorganic substance is from 30/70 to 10/90; and total thickness of the coated layer is from 10 to 60% of that of the microporous polyethylene film.

If the heat resistant resin (which supports the coated layer) swells in the electrolyte at high temperature, the coated layer for improving stability at high temperature cannot be stably present on the base layer any more, but degraded by the electrolyte. Thus, resistance against electrolyte at high temperature is one of the essential requisites upon selecting the polymeric resin. For the resin satisfying the requisite, preferable are those comprising an aromatic ring on the primary chain, and having the glass transition temperature of 170 to 500°C. Those resins include polyarylamide, polyarylate and polyphenylsulfone.

If a coated layer is formed by using above-mentioned heat resistant resin alone, shrinkage of the base layer at high temperature can be prevented. However, such a layer is disadvantageous in that it cannot realize sufficient permeability as a separator. Even though permeability can be realized via phase separation or the like, the coated layer formed within the range of permeability (Gurley) of not more than 300 sec has loose network, thereby disadvantageously reducing the stability at high temperature significantly.

In order to develop a separator having high permeability and stability at high temperature at the same time, at least one kind(s) of inorganic particles selected from $CaCO_3$, $Al_2O_3$, $SiO_2$, $BaTiO_3$ and $TiO_2$ having the diameter of 0.1 to 2 $\mu$m was (were) used together with the heat resistant resin according to the invention. The inorganic particles may be surface-treated in order to enhance adhesion to the heat resistant resin. Since the inorganic substance is rigid, it is not easily deformed by external impact or force. The substance is not thermally deformed at high temperature of 200°C, so that shrinkage of the base layer occurring at high temperature owing to bonding to the heat resistant resin can be prevented. Due to porosity of the inorganic particles and appropriate ratio with respect to the heat resistant resin, permeability can be realized, and a separator ensuring stability at high temperature with retained high permeability can be manufactured accordingly.

According to the present invention, organic/inorganic composite coated layer is additionally formed on at least one side of the microporous polyethylene film, and pores of existing microporous polyethylene film are blocked to cause reduction of permeability. Particularly, if the permeability exceeds 300s owing to formation of composite film, the separator cannot be said being efficient because battery power and battery cycle property would be noticeably deteriorated even though it is a composite film with high heat resistance.

In the present invention, composite films were formed by using microporous polyethylene film with different permeabilities. It was found that permeability range of not more than 300s provides the composite film with excellent stability without inhibiting battery performance.

In order to realize stability at high temperature and high permeability required for the present invention, suitable diameter of inorganic particles is from 0.1 to 2 μm. If the particle size is less than 0.1 μm, surface area of inorganic particles largely increases to remarkably reduce the space between inorganic particles due to bonding to the heat resistant resin, thereby reducing permeability. Thus, high thermal stability and permeability can be hardly obtained to the extent the invention requires.

On the other hand, if the particle size is more than 2 μm, surface area of overall inorganic particles decreases. Thus, a large amount of highly heat-resistant resin would be applied on the surface of the base layer owing to relatively small contact area with highly heat-resistant resin, to result in blocking of pores of the base layer and provide significantly reduced permeability. In addition, the number of inorganic particles existing in a unit area of the base layer decreases, thereby decreasing the contact between the base layer and inorganic substance. Thus, shrinkage of the base layer cannot be effectively prevented. Accordingly, the diameter of inorganic particles should be within the scope of 0.1 to 2 μm in order to ensure sufficient thermal stability with minimized decrease in permeability.

To ensure adhesion between the coated layer and the base layer, stability at high temperature and sufficient permeability, an appropriate composition is required for the solution. High permeability as well as stability at high temperature can be only achieved with the solution having solid content (content of heat resistant resin and inorganic particles, wt%) of 8 to 35 wt% on the basis of 100 wt% of the overall solution.

If the volume ratio of the heat resistant resin to inorganic substance is less than 30/70 (volume %), the structure of the coated layer becomes irregular (owing to large proportion of resin), and porous structure can be hardly generated. Thus, it is difficult to produce a composite film having high permeability, or an effective coated layer on preventing shrinkage at high temperature owing to the reduced ratio of inorganics.

On the other hand, if the volume ratio is more than 10/90 (volume %), proportion of the heat resistant resin serving as binder is too low to provide intimate connection between the coated layer and the base layer and between inorganic substances, even though a coated layer having high permeability can be produced. Thus, thermal stability would become significantly poor.

If solid content is less than 8 wt% within the aforesaid volume ratio, viscosity of the solution becomes too low to form a coated layer having desired thickness; and the amount of heat resistant resin or inorganic particles is too small to retain sufficient stability at high temperature, so that sufficient resistance against deformation of the base layer cannot be obtained.

On the other hand, if the solid content is more than 35 wt%, problems in solution dispersion and precipitation of inorganic particles occur, and viscosity of the solution increases to result in irregular coated layer.

The coated layer prepared by mixing heat resistant resin and inorganic particles in a ratio mentioned above should be manufactured (present) with a thickness from 10 to 60% of that of microporous polyethylene film (base layer), in order to have stability at high temperature and high permeability.

If thickness of the coated layer is less than 10% of the base layer (though it is prepared by using the composition described above), shrinkage of the base layer at elevated temperature cannot be sufficiently prevented, while reduction of permeability is minimized due to the small thickness.

On the other hand, if it is more than 60% of the base layer, large thickness of the coated layer (serving as resistant layer against permeability) results in noticeable decrease of permeability, and deteriorates flexibility of the composite film (coated layer + base layer). Then, moving of the film such as folding may cause breakage of the coated layer to give scattering of inorganic substances of the coated layer. Thus, the film would give poor workability and heat resistance.

A coated layer to be applied to a base layer should have from 15 to 60% of porosity within the range of the thickness mentioned above in order to give an effective composite film. Porosity of the coated layer can be primarily controlled via volume ratio of the resin to the inorganic substance and the solid content. Further it can be controlled through drying process after applying the coated layer.

Lower porosity (with same composition of the solution and same thickness of the coated layer) means relatively compact inorganic substance of high density per unit volume. Thus, increased weight per unit area (as compared to the case of higher porosity) is responsible for decreased energy density (W/kg) of a battery, and low permeability (because of reduced space to give permeability).

On the other hand, if porosity is 60% or more, the pores formed would have a loose structure, or surface of the coated layer would have significantly irregular large pores (defect of micro-void type, caused by inappropriate drying condition at the time of forming the coated layer). Though decrease in permeability of the base layer can be minimized in this case, contact area of the base layer with the coated layer is decreased to deteriorate adhesion between the two layers, which causes release of the coated layer. In addition, the amount of inorganic particles and resin per unit volume is too small to ensure sufficient thermal stability at high temperature. The higher the proportion of inorganic particles is, the higher the porosity of the coated layer appears.

Since the microporous polyethylene film mentioned in the present invention is manufactured via elongation process, shrinkage occurs at high temperature, especially severe shrinkage occurs around 130°C (melting temperature) to result in complete disrupt of the microporous film structure. As described above, use of heat resistant resin alone cannot ensure heat resistance and high permeability at the same time, so that inorganic particles should be admixed to realize both effects.

Shrinkage at high temperature essentially occurs, in case of biaxial elongation, in X and Y direction. In a composite film containing a coated layer made under the conditions mentioned above, only shrinkage of not more than 3% occurs at high temperature of about 150°C. The base layer would cause shrinkage in X and Y direction at high temperature, and the heat-resistant resin and inorganic particles being present on the base layer also experience shrinking force in the same directions. At a temperature ranging from 130°C (at which the base layer shrinks) to melting point of the heat resistant resin, the heat resistant resin maintains solid state to keep connected to inorganic particles; thus, shrinkage of the base layer is inhibited.

For example, when a coated layer is formed on one surface of the base layer, inhibition of shrinkage in the base layer by virtue of the coated layer can be apparently confirmed. At a high temperature of 130°C or higher, shrinkage does not occur on the surface of the base layer on which a coated layer was formed, but shrinkage occurs on that of the base layer without a coated layer; so that the composite film will be rolled up toward the surface without having the coated layer. This shows that the coated layer is not shrunk without alteration at high temperature, but the base layer shrinks to result in rolling.

Such a phenomenon clearly occurs only if satisfying the conditions mentioned above: when any one of the conditions does not meet the requisite, the composite film shrinks at high temperature together with the base layer. Further, since shrinkage in X and Y direction of the base layer is inhibited by means of the coated layer, shrinkage in Z direction (thickness) is observed.

TMA is a general experimental procedure showing thermal behavior at high temperature. A specimen (6 mm x 10 mm) was weighted with a certain weight, and heated at a certain rate to determine the extent of shrinkage and elongation of the specimen. TMA measurement is one of the methods to evaluate stability of a separator itself at high temperature as well as to anticipate thermal stability of a battery.

Accordingly, TMA peak shrinkage temperature and TMA meltdown temperature are criterion to anticipate stability of a separator at high temperature as well as thermal stability of a battery. Conventional microporous polyethylene film has TMA peak shrinkage temperature of about 135 °C. Though the peak shrinkage and shrinkage temperature are determined depending on process parameters, TMA peak shrinkage is generally from 0 to 60%, and TMA meltdown temperature is about 144°C or less. Occasionally, peak shrinkage may be a negative value, but TMA meltdown temperature is usually low (140°C or less).

On the other hand, in case of a composite film having a coated layer formed under the conditions suggested by the present invention, shrinkage of microporous polyethylene film is prevented so that both requisites: peak shrinkage of 3% or less at TMA peak shrinkage temperature, and meltdown temperature of 145°C~200°C: are satisfied.

If the peak shrinkage exceeds 3%, the coated layer cannot effectively prevent shrinkage of the base layer, while the coated layer comprised of inorganic substance and heat resistant resin is usually broken owing to shrinkage of the base layer. Accordingly, sufficient heat resistant property cannot be obtained. TMA meltdown temperature is broadly distributed from 145 °C to 200°C, depending upon the composition of mixed solution to form a coated layer and process conditions. TMA meltdown temperature of a film manufactured from polyarylate alone is about 210°C.

The process for preparing microporous polyethylene composite film according to the invention in order to achieve above-mentioned objects comprises:

(1) preparing a microporous polyethylene film;
(2) dissolving the heat resistant resin in a solvent;
(3) adding inorganic substances to the solution thus prepared to provide a mixed solution;
(4) applying the mixed solution containing the heat resistant resin and inorganic substances on at least one side of the microporous polyethylene film; and
(5) sufficiently drying solvent from the coated layer thus formed.

More specifically, the process comprises:

(a) melting/kneading/extruding a mixture containing 20~50% by weight of polyethylene having weight average molecular weight of $2.0 \times 10^5 \sim 4.5 \times 10^5$ and 80~50% by weight of diluents at a temperature higher than the phase separation temperature in an extruder to obtain a thermodynamically single phase;
(b) subjecting the melt in a single phase to phase separation to form a sheet;
(c) elongating the sheet obtained from (b) at least three (3.0) times in both transverse and machine directions through simultaneous biaxial elongation or consecutive biaxial elongation;
(d) extracting diluents from the elongated film under a certain tensile strength, and drying the film;

(e) removing residual stress of dried film to reduce shrinkage of the film (heat setting);

(f) applying a mixed solution of heat resistant substance dissolved therein on at least one surface of the film prepared from (e); and

(g) drying/removing the solvent from the solution applied in stage (f) to form a coated layer.

Now, each stage of the process is more specifically described.

Low molecular weight organic substance (here-in-below, referred to as diluents), which can form a single phase with polyethylene at high temperature, is extruded/kneaded with polyethylene at a temperature (at which polyethylene melts) to form a thermodynamically single phase.

When the solution of polyethylene and diluent (which constituted a thermodynamically single layer) is cooled to ambient temperature, phase separation of polyethylene and diluent occurs during the cooling stage. One of the phases separated then is comprised of polyethylene rich phase (most of the content is polyethylene), and the other, of diluent rich phase which is comprised of diluent and a small amount of polyethylene dissolved therein.

Upon carrying out phase separation to a desired extent, the melt is thoroughly cooled to solidify the polyethylene rich phase, and the diluent rich phase is extracted with organic solvent to form microporous polyethylene film.

Primary physical properties of the microporous film are determined depending on the concentration of polyethylene contained in the polyethylene rich phase during the course of phase separation. If phase separation is sufficiently achieved to sufficiently raise polyethylene concentration in the polyethylene rich phase, flowability of polyethylene chain is lowered upon elongation after cooling, to provide increased effect of forced orientation. Thus, improvement in mechanical strength after elongation increases. Assuming that phase separation from diluent is thoroughly occurred by using a resin having identical molecular weight, the composition would show far higher mechanical strength as compared to a composition otherwise.

As diluent according to the present invention, any organic liquid which can form a single phase with the resin at the extrusion temperature may be used. For example, diluent may be aliphatic or cyclic hydrocarbons such as nonane, decane, decalin and paraffin oil; phthalic esters such as dibutyl phthalate, dihexyl phthalate and dioctyl phthalate; aromatic ethers such as diphenyl ether and benzyl ether; $C_{10} \sim C_{20}$ fatty acids such as palmitic acid, stearic acid, oleic acid, linoleic acid and linolenic acid; $C_{10} \sim C_{20}$ fatty alcohols such as palmityl alcohol, stearyl alcohol and oleyl alcohol; or fatty acid esters of one or more kinds of fatty acid(s) selected from saturated or unsaturated $C_4 \sim C_{26}$ fatty acids with $C_1 \sim C_{10}$ alcohol containing 1 to 8 hydroxyl groups, such as palmitic mono-, di- or triesters, stearic mono-, di- or triesters, oleic mono-, di- or trimesters and linoleic mono-, di- or trimesters. As long as satisfying the conditions for phase separation, two or more substances (diluents) may be used in combination.

The composition of polyethylene and diluent used according to the present invention is preferably 20~50% by weight of polyethylene and 80~50% by weight of diluent. If the content of diluents is less than 50% by weight, porosity and pore size would decrease, with less inter-connection between pores to result in poor permeability. On the other hand, if the content exceeds 80% by weight, kneadability of polyethylene with diluent becomes poor, so that polyethylene is not thermodynamically kneaded in diluents but extruded as gel type, to cause breakage upon elongation or irregular thickness.

To the composition, conventional additives can be added to enhance certain functions, such as oxidation stabilizer, UV stabilizer and antistatic agent within the concentration range, without deteriorating properties as a separator, if required.

The microporous polyethylene film may further comprise suitable inorganic particles selected to enhance pore formation, heat resistance and impregnation of organic electrolyte. Such particles include inorganic particles such as natural or organically modified clay, and oxide, sulfide, nitride or carbide of metal or semiconductive element such as Si, Al, Ca, Ti, B, Sn, Mg, Li, Co, Ni, Sr, Ce, Zr, Y, Pb, Zn and Ba, used alone or in combination, or a mixture thereof.

In order to prepare a molded article of sheet type from the melt, common casting or calendaring process may be employed. The single phase melt after melting/kneading/extruding is cooled to ambient temperature to obtain a sheet having a certain thickness and width. The sheet prepared through a phase separation process is elongated via biaxial elongation or consecutive biaxial elongation in transverse and machine directions, by at least 3.0 times, respectively, but by 24 to 70 times of total elongation.

The film elongated is extracted with organic solvent to remove internal diluents, and dried. Extraction may be carried out by immersion process, solvent spray process or ultrasonic process, or any conventional solvent extraction process, alone or in combination.

Dried film is subjected to heat setting stage in order to remove residual stress and reduce shrinkage. Heat setting is to fix and heat the film, thereby forcing the film (which tends to be shrunk) to remove residual stress. Duration of heat setting should be relatively short at relatively higher heat setting temperature, and vice versa. Preferably, it is about 15 seconds to 2 minutes.

Gas permeability of the microporous polyethylene film is at least $1.5 \times 10^{-5}$ Darcy, perforation strength is at least 0.1 N/$\mu$m, tensile strength is at least 500 kg/cm$^2$, shut down temperature is not more than 140°C, and melt breakage temperature is at least 140°C, in order to ensure sufficient stability when applied to a battery.

In order to improve thermal stability of the microporous polyethylene film, a heat resistant coated layer (a mixture of highly heat resistant resin and inorganic substance) is formed on at least one surface of the base layer. In this stage, a solution (a mixture of highly heat resistant resin and inorganic substance) is applied to at least one surface of the microporous polyethylene film, and the solvent is dried at proper humidity and temperature with convection to dryness.

The heat resistant resin used for the above stage may be polyarylamide, polyarylate, polyphenylsulfone, or the like. The organic solvent may be any solvent, which can dissolve the heat resistant resin under any condition, and disperse the inorganic substance. Used may be tetrachloroethane, methylene chloride, chloroform, 1,1,2-trichloroethane, tetrahydrofuran, 1,4-dioxane, chlorobenzene, cyclohexanone, dimethylformamide, acetone, dimethylsulfoxide and N-methyl-2-pyrrolidone, alone or as a mixture.

A solution or dispersion for a coated layer comprising the heat resistant resin as described above and one or more inorganic substance(s) selected from $CaCO_3$, $Al_2O_3$, $SiO_2$, $BaTiO_3$ and $TiO_2$ having the particle diameter of 0.1 ~ 2 $\mu$m in organic solvent is applied on at least one surface of the microporous polyethylene film (as a base layer). Volume ratio of the heat resistant resin to the inorganic substance is from 30/70 to 10/90 (volume %), and the solid content is from 8 to 35 wt% on the basis of 100 wt% of the overall solution.

The coating process may be selected from conventional methods known in the art, without particular restriction, which include bar coating process, rod coating process, die coating process, wire coating process, comma coating process, micro gravure/gravure process, dip coating process, spray process, spin coating process, or any mixed modes or modified modes thereof.

Then, a stage of removing some of the coated layer on the surface may be involved by using a doctor blade or an air knife.

The coated layer applied in solution state on the base layer is subjected to removal of solvent via drying stage at a certain temperature and humidity. The drying process is not particularly restrictive, but selected from air blowing, IR heater, UV curing, and the like.

Any simple variations or modifications are covered by the scope of the invention, which is evidently defined in the claims below.

[Mode for Invention]

Now the present invention is more specifically described with respect to the examples, without limiting the scope of the present invention.

[Examples]

Various properties of microporous polyethylene composite film according to the present invention are evaluated according to the following procedures:

(1) Thickness

A thickness gauge of contact type, having the precision of 0.1 $\mu$m was used.

(2) Thickness of coated layer

When a coated layer was formed on a surface of a microporous film, thickness of the coated layer was calculated by difference between the thicknesses of the microporous film before and after coating. In case of coating on both sides, thickness of the coated layer was half (1/2) of the difference between the thicknesses before and after coating. If necessary, cross-section was cut by microtoming (or cryotoming), and the cross-section was observed by means of an electron microscopy to measure the thickness.

(3) Porosity of coated layer (%)

A sample (A cm x B cm) was cut and weighted. The thickness of a coated layer alone was determined by measuring the weight and thickness of the sample. Both A and B are within the range of 5 to 20 cm.

[Formula 1]

$$Porosity = \{1-(M*WR_{poly}/\rho_{poly} + M*WR_{cera}/\rho_{cera})/(A*B*t)\}x100$$

In the formula,

M = weight of coated layer (total weight ?weight of base layer)

$WR_{poly}$ = initial weight ratio of heat resistant resin

$WR_{cera}$ = initial weight ratio of inorganic substance

$\rho_{poly}$ = density of heat resistant resin (g/cm$^3$)

$\rho_{cera}$ = density of inorganic substance (g/cm$^3$)

t = thickness of coated layer (total thickness thickness of base layer)

(4) Particle size

Particle size was determined from apparent pore size measured in an electron microphotograph of a film surface.

(5) Gas permeability (Gurley densometer)

Gas permeability was measured by using Gurley densometer (from Toyoseiki). Duration for a certain volume (100 ml) of gas to pass a definite area (1 in$^2$) under a certain pressure (about 1-2 psig) is expressed in second.

(6) Puncture strength (N/$\mu$m)

Puncture strength was measured by using UTM (Universal Test Machine) 3345 from INSTRON, with pressing at a rate of 120 mm/min. Diameter of the pin was 1.0 mm, and the radius of curvature of the pin tip was 0.5 mm.

[Formula 2]

$$\text{Puncture strength } (N/\mu m) = \text{Measured load}(N)/\text{Thickness of separator}(\mu m)$$

(7) Tensile strength was measured according to ASTM D882.

(8) Shrinkage of microporous polyethylene film was measured after keeping it in an oven at 130°C for 1 hour. Shrinkage of microporous polyethylene composite film with a coated layer was measured in machine and transverse direction after keeping the film in an oven at 150°C for 1 hour. Shrinkage in the direction of thickness (z-direction) was also expressed in percentage after measuring the thickness by means of a thickness gauge as described in clause (1).

(9) TMA meltdown

A TMA (Thermo-mechanical analysis) equipment manufactured from METTLER TOLEDO was used. A specimen (6 mm x 10 mm) was weighted with 0.015N load cell, and heated at a rate of 5°C/min. In a specimen manufactured through elongation processes, shrinkage occurs at a certain temperature; and the specimen elongates due to the weight of the load cell when the temperature is elevated over Tg and Tm. In case of microporous polyethylene film, maximum shrinkage occurs at a high temperature (around 135°C, Tm). In case of a composite film wherein a coated layer was formed, size alteration of the specimen was hardly observed at a high temperature (around 135°C).

Maximum TMA shrinkage point was observed at about 135°C (Tm of polyethylene), and the temperature was recorded as maximum TMA shrinkage temperature. Polyethylene in molten state over the maximum TMA shrinkage temperature begins to elongate due to the weight of the load cell; the temperature at which the length exceeds the initial length (zero point) of the specimen is defined as TMA meltdown. In case of a specimen without shrinkage, TMA meltdown is defined as temperature of intersection with x-axis on the basis of the maximum slope.

(10) Hot box test

A battery was assembled by using microporous polyethylene composite film as a separator. An anode employing

lithium cobalt oxide (LiCoO$_2$) as active material and a cathode employing graphite carbon as active material was rolled with the separator, and incorporated into an aluminum pack. A 1M solution of lithium hexafluorophosphate (LiPF$_6$) in a mixed solution (1:1) of ethylene carbonate and diethylene carbonate was injected as electrolyte, and the pack was sealed to assemble a battery.

The assembled battery was heated at a rate of 5°C/min in an oven. When the temperature reached 150°C, the battery was kept for 30 minutes, and alterations of the battery were measured.

(11) Measurement of nail penetration

A battery was assembled by using microporous polyethylene composite film as a separator. An anode employing lithium cobalt oxide (LiCoO$_2$) as active material and a cathode employing graphite carbon as active material was rolled with the separator, and incorporated into an aluminum pack. A 1M solution of lithium hexafluorophosphate (LiPF$_6$) in a mixed solution (1:1) of ethylene carbonate and diethylene carbonate was injected as electrolyte, and the pack was sealed to assemble a battery.

The assembled battery was fixed, and a nail (diameter = 2.5 mm) was penetrated therethrough at a rate of 80 mm/sec, to observe the behavior of the battery.

(12) Shut down temperature and melt-breakage temperature

Shut down temperature and melt-breakage temperature of microporous polyethylene composite film were measured in a simple cell for measuring impedence. A simple cell was assembled, wherein microporous polyethylene composite film was placed between two graphite electrodes and electrolyte was injected therein. Electric resistance was determined while raising the temperature at a rate of 5°C/min from 25°C to 200°C by using an alternating current. The temperature at which electric resistance abruptly increases to several hundred to several thousand $\Omega$ or more is determined as shut down temperature. The temperature at which electric resistance decreases again down to 100 $\Omega$ or less is determined as melt-breakage temperature. A 1M solution of lithium hexafluorophosphate (LiPF$_6$) in a mixed solution (1:1) of ethylene carbonate and propylene carbonate was used as electrolyte.

[Example 1]

For manufacturing microporous polyethylene film, high density polyethylene having weight average molecular weight of $3.8 \times 10^5$ was employed, with a mixture (1:2 in weight ratio) of dibutyl phthalate and paraffin oil (kinematic viscosity at 40°C is 160 cSt) as diluent. The content of polyethylene and diluent was 30% and 70% by weight, respectively.

The composition was extruded at 240°C by using a biaxial compounder equipped with a T-die, and passed through a section set at 170°C to induce phase separation of polyethylene from diluents (they had been present in a single phase). Sheet was prepared by using a casting roll. A sheet prepared was elongated six (6) times at 128°C of elongation temperature in machine and transverse directions by using a consecutive biaxial stretcher, respectively. After elongation, heat-setting temperature was 128°C and the heat-setting width was controlled in three stages (1-1.2-1.1). Final thickness of the separator prepared was 16 $\mu$m, gas permeability (Gurley) was 130 sec, and shrinkage at 130°C was 20% and 25%, respectively, in machine and transverse directions.

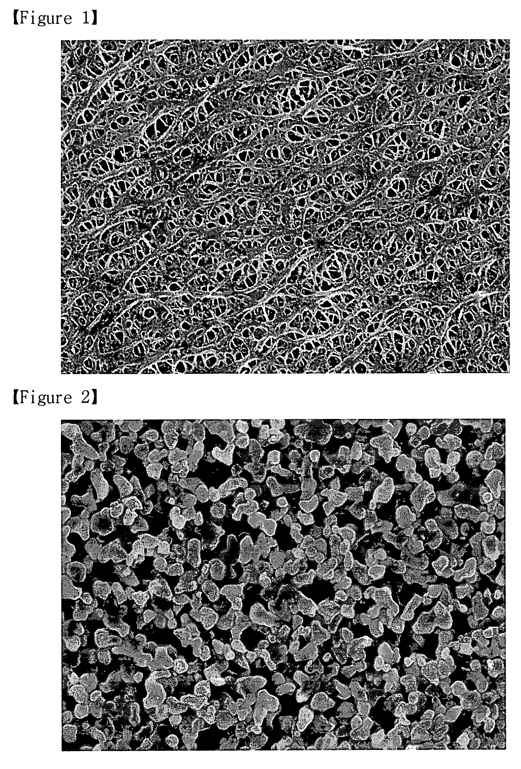

Scanning electron microphotograph ·(SEM) of the surface of microporous polyethylene film thus prepared is shown in Fig. 1.

Microporous polyethylene film manufactured according to the procedure described above was employed, and a solution of overall solid content of 25 wt% was prepared by dissolving polyarylamide having the melting temperature of 231°C (30% by volume) and BaTiO$_3$ powder (mean particle diameter: 0.4 $\mu$m) (70% by volume) in tetrachloroethane, in order to form a coated layer.

After applying the solution on one surface of the base layer by means of bar coating mode, a certain amount of convection was applied in an oven at 50°C, and 80% of humidity to remove/dry tetrachloroethane. Finally, a coated layer of 5.1 $\mu$m thickness was formed on the base layer.

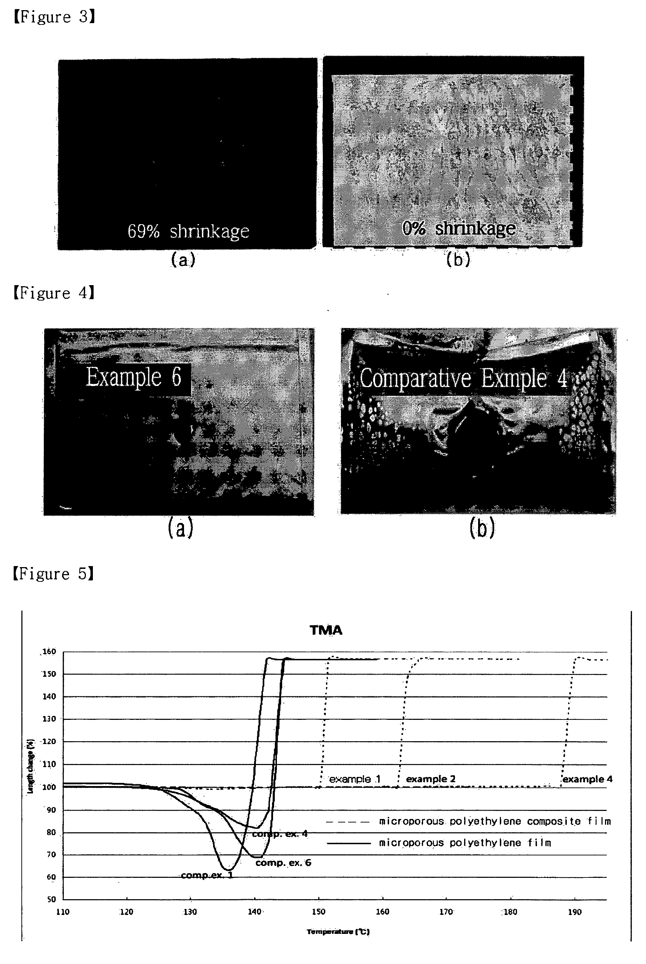

Nail penetration test result obtained by microporous polyethylene composite film manufactured according to the same procedure is shown in Fig.4-(a). As the result of nail penetration test, some fuming occurred but expansion or explosion of a battery was not found.

TMA results of microporous polyethylene composite film manufactured according to the procedure described above are shown in Fig. 5.

[Example 2]

Microporous polyethylene film was manufactured according to the procedure described in Example 1. The film was elongated 7.5 times at 131°C of elongation temperature in each direction. After elongation, heat-setting temperature was 130°C and the heat-setting width was controlled as 1-1.3-1.1. Final thickness of the film prepared was 25 $\mu$m, gas permeability (Gurley) was 100 sec, and shrinkage at 130°C was 25% and 28%, respectively, in machine and transverse directions.

Microporous polyethylene film manufactured according to the procedure described above was employed, and a solution of overall solid content of 30 wt% was prepared by dissolving polyacrylate having glass transition temperature of 201°C (24% by volume) and $SiO_2$ powder (mean particle diameter: 0.8 $\mu$m) (76% by volume) in chlorobenzene, in order to form a coated layer.

After applying the solution on both sides of the base layer by means of dip coating mode, a certain amount of convection was applied in an oven at 50°C, and 80% of humidity to remove/dry chlorobenzene. Finally, a coated layer of having total thickness of 6.3 $\mu$m (3.15 $\mu$m each side) was formed on the base layer.

TMA results of microporous polyethylene composite film manufactured according to the procedure described above are shown in Fig. 5.

[Example 3]

Microporous polyethylene film manufactured according to the procedure described in Example 1 was employed, and a solution of overall solid content of 35 wt% was prepared by dissolving polyphenylsulfone having melting temperature of 231°C (13% by volume) and $SiO_2$ powder (mean particle diameter: 0.2 $\mu$m) (87% by volume) in N-methylpyrrolidone, in order to form a coated layer.

After applying the solution on one side of the base layer by means of micro-gravure coating mode, a certain amount of convection was applied in an oven at 50°C, and 80% of humidity to remove/dry n-methylpyrrolidone. Finally, a coated layer of having thickness of 5.4 $\mu$m was formed on the base layer.

[Example 4]

Microporous polyethylene film manufactured according to the procedure described in Example 1 was employed, and a solution of overall solid content of 11 wt% was prepared by dissolving polyarylamide having glass transition temperature of 231°C (30% by volume) and $BaTiO_3$ powder (mean particle diameter: 0.4 $\mu$m) (70% by volume) in methylene chloride, in order to form coated layers on both sides of the base layer.

After applying the solution on one side of the base layer by means of comma coating mode, a certain amount of convection was applied in an oven at 50°C, and 80% of humidity to remove/dry methylene chloride. Finally, a coated layer of having thickness of about 3 $\mu$m was formed on one side of the base layer, and another coated layer having thickness of about 3 $\mu$m was formed on the other side, thereby providing coated layers having total thickness of 5.8 $\mu$m.

After keeping the film in an oven at 150°C for 1 hour, less than 1% of shrinkage of the film in machine and transverse direction each was observed (Fig. 3-(b)).

TMA results of microporous polyethylene composite film manufactured according to the procedure described above are shown in Fig. 5.

[Example 5]

Microporous polyethylene film manufactured according to the procedure described in Example 2 was employed, and a solution of overall solid content of 18 wt% was prepared by dissolving polyacrylate having glass transition temperature of 201°C (14% by volume) and $Al_2O_3$ powder (mean particle diameter: 0.2 $\mu$m) (86% by volume) in tetrahydrofuran, in order to form a coated layer.

After applying the solution on one side of the base layer by means of die coating mode, a certain amount of convection was applied in an oven at 50 °C, and 80% of humidity to remove/dry tetrahydrofuran. Finally, a coated layer of having thickness of 3.1 $\mu$m was formed on the base layer.

[Example 6]

Microporous polyethylene film manufactured according to the procedure described in Example 1 was employed, and a solution of overall solid content of 22 wt% was prepared by dissolving polyphenylsulfone having glass transition temperature of 201°C (15% by volume) and $Al_2O_3$ powder (mean particle diameter: 0.4 $\mu$m) (85% by volume) in trichloroethane, in order to form a coated layer.

After applying the solution on one side of the base layer by means of die coating mode, a certain amount of convection was applied in an oven at 50 °C, and 80% of humidity to remove/dry trichloroethane. Finally, a coated layer of having thickness of 4.3 $\mu$m was formed on the base layer.

Scanning electron microphotograph (SEM) of the surface of microporous polyethylene composite film prepared with inorganic powder is shown in Fig. 2.

[Comparative Example 1]

Microporous polyethylene film manufactured according to the procedure of Example 1 was used alone.
Scanning electron microphotograph (SEM) of the surface of microporous polyethylene film is shown in Fig. 1.
After keeping the film in an oven at 150°C for 1 hour, about 69% of shrinkage on the basis of total area was observed (Fig. 3-(a)).
TMA results of microporous polyethylene composite film manufactured according to the procedure described above are shown in Fig. 5.

[Comparative Example 2]

Microporous polyethylene film manufactured according to the procedure described in Example 1 was employed, and a solution of overall solid content of 5 wt% was prepared by dissolving polyarylate having glass transition temperature of 201°C in dichloroethane, in order to form a coated layer.
After applying the solution on one side of the base layer by means of bar coating mode, a certain amount of convection was applied in an oven at 50 °C, and 80% of humidity to remove/dry dichloroethane. Finally, a coated layer of having thickness of 2.7 $\mu$m was formed on the base layer.

[Comparative Example 3]

Microporous polyethylene film manufactured according to the procedure described in Comparative Example 1 was employed, and a solution of overall solid content of 7wt% was prepared by dissolving polyarylamide having glass transition temperature of 189°C (15% by volume) and $Al_2O_3$ powder (mean particle diameter: 0.1 $\mu$m) (85% by volume) in tetrahydrofuran, in order to form a coated layer.
After applying the solution on one side of the base layer by means of bar coating mode, the film was dried in an oven at 50°C, and 80% of humidity to remove tetrahydrofuran. Finally, a coated layer of having thickness of 1.3 $\mu$m was formed on the base layer.

[Comparative Example 4]

Microporous polyethylene film manufactured according to the procedure described in Comparative Example 1 was employed, and a solution of overall solid content of 25 wt% was prepared by dissolving non-aromatic polyvinylidenefluoride-hexafluoropropylene (PVDF-HFP) having melting temperature of 160°C (35% by volume) and $BaTiO_3$ powder (mean particle diameter: 0.4 $\mu$m) (65% by volume) in acetone, in order to form a coated layer.
After applying the solution on one side of the base layer by means of die coating mode, a certain amount of convection was applied in an oven at 50 °C, and 80% of humidity to remove/dry acetone. Finally, a coated layer of having thickness of 5.2 $\mu$m was formed on the base layer.
Nail penetration test result obtained by microporous polyethylene composite film manufactured according to the same procedure is shown in Fig.4-(b). As the result of nail penetration test, some fuming occurred with expansion and fire of the battery.
TMA results of microporous polyethylene composite film manufactured according to the procedure described above are shown in Fig. 5.

[Comparative Example 5]

Microporous polyethylene film manufactured according to the procedure described in Comparative Example 1 was employed, and a solution of overall solid content of 30 wt% was prepared by dissolving polyphenylsulfone having glass transition temperature of 189°C (21% by volume) and $CaCO_3$ powder (mean particle diameter: 0.08 $\mu$m) (79% by volume) in methylene chloride, in order to form a coated layer.
After applying the solution on one side of the base layer by means of comma coating mode, a certain amount of convection was applied in an oven at 50°C, and 80% of humidity to remove/dry methylene chloride. Finally, a coated layer of having thickness of 5.1 $\mu$m was formed on the base layer.

[Comparative Example 6]

Microporous polyethylene film manufactured according to the procedure described in Comparative Example 1 was employed, and a solution of overall solid content of 27 wt% was prepared by dissolving polyacrylate having glass transition temperature of 201°C (30% by volume) and $Al_2O_3$ powder (mean particle diameter: 2.6 $\mu$m) (70% by volume) in tetrahydrofuran, in order to form a coated layer.

After applying the solution on one side of the base layer by means of micro-gravure mode, a certain amount of convection was applied in an oven at 50°C, and 80% of humidity to remove/dry tetrahydrofuran. Finally, a coated layer of having thickness of 7.8 $\mu$m was formed on the base layer.

TMA results of microporous polyethylene composite film manufactured according to the procedure described above are shown in Fig. 5.

The experimental conditions of Examples and Comparative Examples, and results therefrom are summarized in Tables 1 and 2. Since the composite film manufactured according to the present invention must possess high heat resistance and high permeability at the same time, final evaluation of the film is rendered 'pass' when satisfying all the conditions described below, but 'fail' when it does not satisfy any one of the conditions.

 1. Permeability of overall composite film comprising a coated layer is 300 sec or less.
 2. Shrinkage after 150°C for 1 hour in machine/transverse directions each is not more than 0~3%.
 3. Maximum shrinkage at TMA peak shrinkage temperature is not more than 3%, while meltdown temperature is from 145°C to 200°C.
 4. The film passes hot box test and nail penetration test.

[Table 1]

| | | | Unit | Example 1 | Example 2 | Example 3 | Example 4 | Example 5 | Example 6 |
|---|---|---|---|---|---|---|---|---|---|
| | Base layer | | | PE | PE | PE | PE | PE | PE |
| Heat-resistant treatment | | Resin | | PAA[1] | PAR[2] | PPSF[3] | PAA | PAR | PPSF |
| | | Solvent | | Tetrachloro-ethane | Chloro benzene | NMP | MC | THF | Trichloro-ethane |
| | | Volume ratio (resin/inorganics) | | 30/70 | 24/76 | 13/87 | 30/70 | 14/86 | 15/85 |
| | | Solid(wt%) (resin+inorganics) | | 25 | 30 | 35 | 11 | 18 | 22 |
| | | Inorganics (diameter) | | $BaTiO_3$ (0.4 $\mu$m) | $SiO_2$ (0.8 $\mu$m) | $SiO_2$ (0.2$\mu$m) | $BaTiO_3$ (0.4 $\mu$m) | $Al_2O_3$ (0.2 $\mu$m) | $Al_2O_3$ (0.4 $\mu$m) |
| | | Coating mode | | BAR | DIP | MICRO-GRAVURE | COMMA | DIE | DIE |
| Thickness of base layer | | | $\mu$m | 15.8 | 24.3 | 15.6 | 15.8 | 23.8 | 16.0 |
| Thickness of coated layer | | | $\mu$m | 5.1 | 6.3 | 5.4 | 5.8 | 3.1 | 4.3 |
| Gas permeability | | | Sec | 194 | 284 | 271 | 240 | 173 | 210 |
| Porosity of coated layer | | | % | 37 | 51 | 23 | 57 | 19 | 32 |
| Perforation strength | | | N/$\mu$m | 0.227 | 0.177 | 0.218 | 0.192 | 0.182 | 0.227 |
| Tensile strength | | MD | Kgf/cm$^2$ | 1437 | 1259 | 1440 | 1394 | 1354 | 1583 |
| | | TD | Kgf/ cm$^2$ | 793 | 600 | 882 | 837 | 595 | 929 |
| Shrinkage after 150°C, 1 hr | | MD | % | 0.7 | 0.2 | 0.4 | 1.1 | 2.4 | 0.8 |
| | | TD | % | 0.5 | 0.7 | 0.2 | 0.9 | 1.6 | 0.6 |
| TMA | | Max. shrinkage | % | 0.5 | 0.2 | 0.2 | 0 | 1.2 | 0 |
| | | Meltdown | °C | 151 | 163 | 159 | 187 | 146 | 174 |
| Hot box (150°C, 30 min) | | | Pass /Fail | Pass | Pass | Pass | Pass | Pass | Pass |
| Nail penetration | | | Pass /Fail | Pass | Pass | Pass | Pass | Pass | Pass |
| Final evaluation | | | Pass /Fail | Pass | Pass | Pass | Pass | Pass | Pass |

PAA[1]: Polyarylamide
PAR[2]: Polyarylate
PPSF[3]: Polyphenylsulfone

[Table 2]

| | | Unit | Comp. Ex.1 | Comp. Ex2 | Comp. Ex3 | Comp. Ex4 | Comp. Ex5 | Comp. Ex.6 |
|---|---|---|---|---|---|---|---|---|
| Base layer | | | PE | PE | PE | PE | PE | PE |
| Heat-resistant treatment | Resin | | - | PAR[2] | PAA[1] | PVDF-HFP[4] | PPSF[3] | PAR[2] |
| | Solvent | | - | Dichlo ro-ethane | THF | Acetone | MC | THF |
| | Volume ratio (resin/inorganics) | | - | - | 15/85 | 35/65 | 21/79 | 30/70 |
| | Solid(wt%) (resin+inorganics) | | - | - | 9 | 25 | 30 | 27 |
| | Inorganics (Diameter) | | - | - | $Al_2O_3$ (0.1 $\mu$m) | $BaTiO_2$ (0.4 $\mu$m) | $CaCO_3$ (0.08 $\mu$m) | $Al_2O_3$ (2.6 $\mu$m) |
| | Coating mode | | - | BAR | BAR | DIE | COMMA | Micro gravure |
| Thickness of base layer | | $\mu$m | 15.8 | 15.8 | 16.0 | 23.8 | 24.2 | 15.7 |
| Thickness of coated layer | | $\mu$m | - | 2.7 | 1.3 | 5.2 | 5.1 | 7.8 |
| Gas permeation | | Sec | 130 | | 124 | 273 | 1507 | 953 |
| Porosity of coated layer | | % | - | 0 | 60 | 47 | 29 | 26 |
| Perforation strength | | N/$\mu$m | 0.281 | 0.227 | 0.255 | 0.233 | 0.215 | 0.173 |
| Tensile strength | MD | Kgf/cm$^2$ | 1707 | 1472 | 1571 | 1501 | 1473 | 1278 |
| | TD | Kgf/cm$^2$ | 1043 | 943 | 953 | 767 | 782 | 665 |
| Shrinkage after 150°C, 1hr | MD | % | 69 | 0.1 | 63 | 13 | 7 | 54 |
| | TD | % | 57 | 0.1 | 54 | 11 | 6 | 56 |
| TMA | Max. shrinkage | % | 38 | 0 | 16 | 27 | 27 | 32 |
| | Meltdown | °C | 140 | 190 | 141 | 143 | 144 | 142 |
| Hot box (150°C, 30min) | | - | Fail | Pass | Fail | Fail | Fail | Fail |
| Nail penetration | | - | Fail | - | Fail | Pass | Fail | Fail |

|  | Unit | Comp. Ex.1 | Comp. Ex2 | Comp. Ex3 | Comp. Ex4 | Comp. Ex5 | Comp. Ex.6 |
|---|---|---|---|---|---|---|---|
| Final evaluation | Pass/Fail | Fail | Fail | Fail | Fail | Fail | Fail |
| PVDF-HFP[4] : Polyvinylidene fluoride hexafluoroethylene | | | | | | | |

[Industrial Applicability]

Microporous polyethylene composite film according to the invention can be utilized in various battery separators, filters for separation and membrane for microfiltration due to excellent chemical stability and physical properties. More preferably, the composite film can be employed as a separator for a secondary battery, such as a lithium secondary battery, or fuel cells.

**Claims**

1. Microporous polyethylene composite film having a microporous organic/inorganic composite coated layer, wherein the coated layer is formed on at least one side of the microporous polyethylene film by using a heat resistant resin of melting temperature or glass transition temperature from 170°C to 500°C and inorganic particles at the same time, wherein the heat resistant resin to form the coated layer is selected from polyphenylsulfone and polyarylamide, wherein the inorganic particles comprise at least one of $CaCO_3$, $Al_2O_3$, $SiO_2$, $BaTiO_3$ and $TiO_2$ having the diameter of 0.1 to 2 $\mu$m,
wherein the coated layer has volume ratio of the heat resistant resin to the inorganic substance of 30/70 to 10/90 vol-%, wherein overall thickness of the coated layer is from 10 to 60% of that of the microporous polyethylene film, and porosity of the coated layer itself is from 15 to 60%, and wherein

   (1) permeability (Gurley) of overall composite film comprising a coated layer is not more than 300 sec,
   (2) shrinkage after 150°C for 1 hour is 0-3% in both MD/TD directions,
   (3) maximum TMA shrinkage is not more than 3%, and meltdown temperature is 145-200°C.

2. A process for preparing a microporous polyethylene composite film according to claim 1, which comprises mixing and dissolving a heat resistant resin selected from polyphenylsulfone and polyarylamide in a solvent; dispersing inorganic particles comprising at least one of $CaCO_3$, $Al_2O_3$, $SiO_2$, $BaTiO_3$ and $TiO_2$ having the diameter of 0.1 to 2 $\mu$m in the solution obtained above to obtain a mixed solution; applying the mixed solution containing volume ratio of the heat resistant resin to the inorganic substance of 30/70 to 10/90 vol-% on one or both sides of the surface of microporous polyethylene film; and drying residual solvent from the coated layer thus formed.

3. The process according to claim 2, wherein the mixed solution to form the coated layer comprises solid content (heat resistant resin and inorganic particles) of 8-35 wt.-% on the basis of 100 wt.-% of the overall solution.

4. A separator for a battery, which comprises microporous polyethylene composite film according to claim 1.

5. A battery device, comprising a separator according to claim 4.

6. The battery device according to claim 5, which is a lithium ion battery or fuel cell.

**Patentansprüche**

1. Mikroporöse Polyethylen-Verbundfolie mit einer mikroporösen organisch/anorganischen Verbundstoff-beschichteten Schicht, wobei die beschichtete Schicht auf mindestens einer Seite der mikroporösen Polyethylenfolie unter gleichzeitiger Verwendung eines wärmebeständigen Harzes, das eine Schmelztemperatur oder Glasübergangstemperatur von 170°C bis 500 °C aufweist, sowie anorganischer Partikel ausgebildet ist, wobei das wärmebeständige Harz zur Ausbildung der beschichteten Schicht ausgewählt ist aus Polyphenylsulfon und Polyarylamid, wobei die anorganischen Partikel mindestens eines aus $CaCO_3$, $Al_2O_3$, $SiO_2$, $BaTiO_3$ und $TiO_2$ mit einem Durchmesser von 0,1 bis 2 $\mu$m umfassen, wobei die beschichtete Schicht ein Volumenverhältnis des wärmebeständigen Harzes zu der anorganischen Substanz von 30/70 bis 10/90 Vol.-% aufweist, wobei die Gesamtdicke der beschichteten Schicht 10% bis 60% derjenigen der mikroporösen Polyethylenfolie beträgt, und die Porosität der beschichteten Schicht selbst 15% bis 60% beträgt, und wobei

   (1) die Durchlässigkeit (Gurley) der gesamten Verbundfolie umfassend eine beschichtete Schicht nicht mehr als 300 s beträgt,
(2) die Schrumpfung nach 150 °C für 1 Stunde 0 bis 3% sowohl in MD- als auch in TD-Richtung beträgt,
(3) die maximale TMA Schrumpfung nicht mehr als 3%, und die Einschmelz-temperatur (meltdown temperature) 145 bis 200°C beträgt.

2. Verfahren zur Herstellung einer mikroporösen Polyethylen-Verbundfolie nach Anspruch 1, umfassend
Mischen und Lösen eines wärmebeständigen Harzes, das ausgewählt ist aus Polyphenylsulfon und Polyarylamid, in einem Lösungsmittel;
Dispergieren anorganischer Partikel umfassend mindestens eines aus $CaCO_3$, $Al_2O_3$, $SiO_2$, $BaTiO_3$ und $TiO_2$ mit einem Durchmesser von 0,1 bis 2 $\mu$m in der zuvor erhaltenen Lösung, um eine Mischlösung zu erhalten;
Aufbringen der Mischlösung enthaltend ein Volumenverhältnis des wärmebeständigen Harzes zu der anorganischen Substanz von 30/70 bis 10/90 Vol.-% auf eine oder beide Seiten der Oberfläche der mikroporösen Polyethylenfolie; und
Trocknen des Restlösungsmittels aus der dabei gebildeten beschichteten Schicht.

3. Verfahren nach Anspruch 2, wobei die Mischlösung zur Ausbildung der beschichteten Schicht einen Feststoffgehalt (wärmebeständiges Harz und anorganische Partikel) von 8 bis 35 Gew.-%, basierend auf 100 Gew.-% der gesamten Lösung, umfasst.

4. Separator für eine Batterie, der eine mikroporöse Polyethylen-Verbundfolie nach Anspruch 1 umfasst.

5. Batterievorrichtung, umfassend einen Separator gemäß Anspruch 4.

6. Batterievorrichtung nach Anspruch 5, die eine Lithiumionenbatterie oder Brennstoffzelle ist.

**Revendications**

1. Film de polyethylene composite microporeux ayant un film revêtu microporeux organique/inorganique composite, dans lequel le film revêtu est formé au moins sur une côté du film de polyethylene microporeux en utilisant une résine résistante à la chaleur de température de fusion ou température de transition vitreuse de 170°C à 500°C et des particules inorganiques dans le même temps,
dans lequel la résine résistante à la chaleur pour former le film revêtu est sélectionnée parmi polyphénylsulfone et polyarylamide,
dans lequel les particules inorganiques comprennent au moins une de $CaCO_3$, $Al_2O_3$, $SiO_2$, $BaTiO_3$ et $TiO_2$ ayant un diamètre de 0.1 à 2 $\mu$m,
dans lequel le film revêtu a un rapport en volume de la résine résistante à la chaleur à la substance inorganique de 30/70 à 10/90 vol-%,
dans lequel l'épaisseur globale du film revêtu est entre 10 à 60% de celle du film de polyethylene microporeux, et la porosité du film revêtu lui-même è entre 15 à 60%, et
dans lequel

(1) perméabilité (Gurley) du film composite global comprenant le film revêtu n'est pas plus que 300 sec,
(2) retrait après 150°C pour 1 heure est 0-3% dans les deux directions MD/TD,
(3) retrait maximum TMA n'est pas plus que 3%, et la température de fusion est 145-200°C.

2. Un procédé de préparation d'un film de polyethylene composite microporeux selon la revendication 1, comprenant
mélanger et dissoudre une résine résistant à la chaleur sélectionnée parmi polyphénylsulfone et polyarylamide dans un solvant;
disperser des particules inorganiques comprenant au moins un de $CaCO_3$, $Al_2O_3$, $SiO_2$, $BaTiO_3$ and $TiO_2$ ayant le diamètre de 0.1 à 2 $\mu$m dans la solution obtenue ci-dessus pour obtenir une solution mixte;
application de la solution mixte contenant un rapport de volume de la résine résistant à la chaleur à la substance inorganique de 30/70 à 10/90 vol-% sur une ou deux côtés de la surface du film de polyethylene microporeux; et
séchage du solvant résiduel du film revêtu ainsi formé.

3. Le procédé selon la revendication 2, dans lequel la solution mixte pour former le film revêtu comprend un contenu solide (résine résistant à la chaleur et particules inorganiques) de 8-35% en poids sur la base de 100% en poids de la solution globale.

4. Un séparateur pour une batterie, qui comprend un film de polyethylene composite microporeux selon la revendication 1.

5. Un dispositif de batterie, comprenant un séparateur selon la revendication 4.

6. Le dispositif de batterie selon la revendication 5, qui est une batterie au lithium-ion ou une pile à combustible.

【Figure 1】

【Figure 2】

【Figure 3】

(a) 69% shrinkage     (b) 0% shrinkage

【Figure 4】

(a) Example 6     (b) Comparative Exmple 4

【Figure 5】

**EP 2 443 186 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5641565 A
- US 5691077 A
- JP 2002321323 A
- KR 20070080245
- WO 2005049318 A
- JP 2002355938 A
- KR 1020040050149
- KR 1020070080245
- JP 2007273443 A
- KR 1020060101541